# EUROPÄISCHE PATENTSCHRIFT

(11) **EP 2 455 257 B1**
(45) Veröffentlichungstag und Bekanntmachung des Hinweises auf die Patenterteilung: **25.06.2014**
(21) Anmeldenummer: 10192205.2
(22) Anmeldetag: 23.11.2010
(51) Int. Cl.: B60P 7/08

(54) **Spannvorrichtung zum Spannen von Gurten oder dergleichen**
Tensioning device for tensioning belts or similar
Dispositif de serrage destiné au serrage de ceintures ou analogues

(43) Veröffentlichungstag der Anmeldung: 23.05.2012
(73) Patentinhaber: Westdeutscher Drahtseil-Verkauf Dolezych GmbH & Co. KG, 44147 Dortmund (DE)
(72) Erfinder: Schöbel,Uwe, 58730 Fröndenberg (DE)
(74) Vertreter: Nunnenkamp, Jörg

(56) Entgegenhaltungen:
- EP-A1- 1 876 374
- WO-A2-2007/059244
- DE-U1-202010 000 251
- US-A1- 2005 125 959
- US-B1- 7 444 718

## Beschreibung

Die Erfindung betrifft eine Spannvorrichtung zum Spannen von Gurten oder dergleichen, mit einem Spannrahmen mit an einem Ende angeordneten Anschlusselement und einem an dem Spannrahmen schwenkbar gelagerten Spannhebel zum Betätigen einer in dem Spannrahmen um eine Achse drehbar gelagerten Antriebswelle mit zumindest einem zugehörigen Gesperrerad, und mit einem mit dem Gesperrerad wechselwirkenden Sperrmittel, welches an einem dem Anschlusselement entgegengesetzten anderen Ende des Spannrahmens jenseits des Gesperrerades vorgesehen ist, wobei das Anschlusselement zur Festlegung eines festen Gurtbandendes dient, wohingegen das Führungselement ein freies Gurtbandende führt, bevor dieses in die Antriebswelle eintritt und hierin aufgenommen werden kann.

Eine derartige Spannvorrichtung wird in der EP 0 489 376 B1 beschrieben. Die bekannte Spannvorrichtung ist mit dem besonderen Vorteil ausgerüstet, dass das auf der Antriebswelle aufzuwickelnde freie Gurtbandende von beiden Anschlussenden der Spannvorrichtung aus gesehen in diese eingeführt werden kann. Folgerichtig steht es einer Bedienperson völlig frei, die optimale Zuordnung der Ratsche bzw. deren Arbeitsrichtung im Zurrsystem in beliebiger Weise zu bestimmen. Mit Hilfe des an dem Spannrahmen schwenkbar gelagerten Spannhebels wird die Antriebswelle in Drehungen versetzt. Mit der Antriebswelle ist das Gesperrerad drehfest verbunden und weist Sperrzähne auf.

An dem Spannhebel ist meistens ein mit dem Gesperrerad zusammenwirkendes Mitnehmerelement gegen die Wirkung eines Rückstellelementes verschiebbar gelagert. Außerdem findet sich eine Steuerkurve, mit deren Hilfe das dem Gesperrerad zugeordnete Sperrmittel in eine unwirksame Stellung überführt wird. Die bekannte Steuerkurve arbeitet lediglich über einen geringen Drehweg auf das Sperrmittel, um dieses in die unwirksame Stellung zu überführen, damit der zuvor gespannte Gurt freikommt. Als Folge hiervon stellt sich oftmals eine schlagartige Entspannung des Gurtes bzw. Gurtbandes ein. Das ist insofern nachteilig, als hieraus unkontrollierte Entlastungen der festgezurrten Güter resultieren können. Außerdem ist die bekannte Spannvorrichtung insgesamt bedienerseitig verbesserungsfähig.

An dieser grundsätzlichen Problematik hat auch der weitere Stand der Technik nach der EP 1 876 374 A1 nichts Wesentliches ändern können. Auch in diesem Fall geht es um eine Spannvorrichtung mit Gesperrerad und Sperrmittel, bei dem allerdings das Geräuschverhalten im Vordergrund steht.

Durch die DE 20 2010 000 251 U1 ist eine Spulvorrichtung eines Gurtspanners bekannt geworden, bei welcher eine Drehscheibe zum Einsatz kommt. Durch die Rotation der Drehscheibe wird eine Verbindungsstange zum Drehen gebracht. Auf diese Weise lässt sich der an die Verbindungsstange angeschlossene Gurt aufspulen und spannen.

Schließlich beschreibt die WO 2007/059 244 A2 eine Spannvorrichtung, die mit einer Vorspannung arbeitet. Die vorerwähnten Probleme sind hiervon nicht maßgeblich beeinflusst worden.

Der Erfindung liegt das technische Problem zugrunde, eine Spannvorrichtung des eingangs beschriebenen Aufbaus so weiter zu entwickeln, dass die Bedienung insgesamt verbessert ist und insbesondere das Gurtlösen problemlos vonstatten geht. Außerdem soll der Verschleiß minimiert werden.

Zur Lösung dieser technischen Problemstellung ist eine gattungsgemäße Spannvorrichtung zum Spannen von Gurten oder dergleichen im Rahmen der Erfindung dadurch gekennzeichnet, dass das Sperrmittel größtenteils unterhalb einer Horizontalebene des Spannrahmens angeordnet ist, wobei die Horizontalebene durch einerseits das Anschlusselement und andererseits ein Führungselement definiert wird, die jeweils endseitig des Spannrahmens platziert sind.

Die besagte Horizontalebene wird einerseits durch das Anschlusselement und andererseits das Führungselement definiert. Das Anschlusselement und das Führungselement sind jeweils endseitig des Spannrahmens platziert. Im Detail handelt es sich bei dem Anschlusselement und dem Führungselement üblicherweise um Bolzen und insbesondere Verbindungsbolzen. Mit Hilfe dieser Bolzen bzw. Verbindungsbolzen werden die beiden Seitenwangen des Spannrahmens in der Regel miteinander gekoppelt. Auf dieser Weise setzt sich der Spannrahmen aus den beiden Seitenwangen und dem jeweils endseitigen Anschlusselement und Führungselement zusammen. Das ist selbstverständlich nur beispielhaft und nicht zwingend zu verstehen, zumal der Spannrahmen grundsätzlich auch einstückig ausgeführt sein kann.

Das Anschlusselement dient in der Regel dazu, ein festes Ende des Gurtes mit der Spannvorrichtung zu koppeln. Das lose Ende des Gurtes, das freie Gurtbandende, wird demgegenüber in die Antriebswelle eingeschlauft, und zwar meistens in einen Schlitz in der Antriebswelle. Indem die Antriebswelle mit Hilfe des Spannhebels eine Drehung erfährt, wird das lose Ende des Gurtes nach Umschlingen eines Ladegutes gespannt und festgezurrt. Bei diesem Vorgang sorgt das mit dem Gesperrerad wechselwirkende Sperrmittel jeweils dafür, dass sich die Antriebswelle nicht entgegen der Spannrichtung öffnet und rotiert. Zum Lösen des freien Gurtbandendes arbeitet die am Spannhebel vorgesehene Steuerkurve auf das Sperrmittel, welches von dem Gesperrerad abgehoben wird. Das kann aufgrund der Anordnung des Sperrmittels größtenteils unterhalb der Horizontalebene des Spannrahmens besonders feinfühlig erfolgen, wie nachfolgend noch näher erläutert wird. Denn diese Auslegung ermöglicht es, mit einer Steuerkurve am Spannhebel arbeiten zu können, die einen signifikanten Bogenwinkel von meistens deutlich mehr als 10° beschreibt.

Tatsächlich ist das Sperrmittel im Allgemeinen schräg geneigt gegenüber der betreffenden Horizontalebene angeordnet und greift in dieser Schrägneigung in das Gesperrerad ein. Dabei wird meistens eine Neigung gegenüber der Horizontalen im Bereich von ca. 10° bis 40° und vorzugsweise zwischen ca. 15° bis 25° verfolgt. Bei dem Sperrmittel als solchen handelt es sich typischerweise um einen Sperrklinkenschieber. Der Sperrklinkenschieber wird im Allgemeinen in Schlitzführungen des Spannrahmens geführt. Dabei finden sich meistens zwei gegenüberliegende Schlitzführungen, und zwar jeweils in den Seitenwangen des Spannrahmens.

Der Spannhebel verfügt nun aufgrund der speziellen Konstruktion über einen annähernd als Halbkreis ausgebildeten gesamten Schwenkbereich. Eine solche Auslegung ist möglich, weil sich der Spannhebel praktisch von dem Anschlusselement an einem Ende des Spannrahmens bis hin zum Führungselement am anderen Ende des Spannrahmens um seine Achse verschwenken lässt. Dies ist u. a. eine Folge der Tatsache, dass das Sperrmittel größtenteils unterhalb der Horizontalebene des Spannrahmens angeordnet ist, folglich Bewegungen des Spannhebels nicht oder praktisch nicht behindert. Tatsächlich verfügt der Spannhebel typischerweise über einen Schwenkbereich von bis zu 170°. Der betreffende Schwenkbereich von bis zu 170° setzt sich in der Regel aus einem Spannbereich und einem Lösebereich zusammen. Innerhalb des Spannbereiches arbeitet der Spannhebel mit Hilfe des bereits angesprochenen Mitnehmerelementes auf die Antriebswelle und das zugehörige Gesperrerad. Dabei ist das Mitnehmerelement regelmäßig verschiebbar in dem Spannhebel gelagert und wirkt mit dem Gesperrerad zusammen, und zwar gegen die Wirkung eines Rückstellelementes. Bei dem Rückstellelement handelt es sich im Allgemeinen um eine oder mehrere Federn.

Dem Mitnehmerelement ist größtenteils ein Anschlag zugeordnet. Dieser Anschlag findet sich am Spannrahmen. Der Anschlag begrenzt den Spannbereich bzw. muss von dem Mitnehmerelement überwunden werden, damit der Spannhebel von seinem Spannbereich in den Lösebereich überführt werden kann. D. h., der Anschlag wird von dem Mitnehmerelement bei einem Auslösehub des Spannhebels zum Überführen des Sperrmittels in seine unwirksame Stellung überfahren. Zu diesem Zweck verfügt der Anschlag vorteilhaft über eine Gleitkante für das Mitnehmerelement. Die Gleitkante für das Mitnehmerelement beschreibt im Allgemeinen einen an die Steuerkurve angepassten Bogenbereich und schließt sich an den Anschlag an.

Da das Sperrmittel größtenteils unterhalb der Horizontalebene des Spannrahmens angeordnet ist, kann die Gleitkante ― ebenso wie die Steuerkurve am Spannhebel - einen ausgeprägten Bogenbereich für das Mitnehmerelement beschreiben. Dieser Bodenbereich der Gleitkante entspricht im Wesentlichen dem Bogenbereich der Steuerkurve an dem Spannhebel. Tatsächlich wechselwirkt die Steuerkurve mit dem Sperrmittel zur Einnahme dessen unwirksamer Stellung im Allgemeinen über einen Schwenkbereich des Spannhebels von mehr als 10°. Meistens werden sogar Bogenwinkel von mehr als 15°, insbesondere solche von mehr als 20° und ganz besonders bevorzugt Bogenwinkel von mehr als 25° beobachtet. In gleicher Weise verfügt die Gleitkante über einen vergleichbaren Bogenwinkel von mehr als 10°, insbesondere mehr als 15° und vorzugsweise einen solchen von mehr als 20°, wobei ganz besonders bevorzugt ein Bogenwinkel von mehr als 25° vorliegt.

Durch diese Auslegung kann die Steuerkurve des Spannhebels über einen relativ großen Bogenwinkel von typischerweise deutlich mehr als 10° mit dem Sperrmittel wechselwirken und dieses von seinem Eingriff mit dem Gesperrerad entfernen. Dadurch stellt sich der bereits angesprochene Lösebereich ein, welcher ebenfalls und typischerweise weit mehr als 10° des gesamten Schwenkbereiches des Spannhebels einnimmt. Dadurch lässt sich die Spannvorrichtung selbst bei maximaler Belastung besonders weich, gleichsam "butterweich" öffnen.

Außerdem sorgt der zu dem Lösebereich korrespondierende Schwenkbereich des Spannhebels von mehr als 10° dafür, dass ein etwaiger Verschleiß zwischen der Steuerkurve und dem Sperrmittel vermindert ist. D. h., an dieser Stelle wird eine Verschleißminimierung durch die im Vergleich zum Stand der Technik verbesserte Anordnung zwischen der Steuerkurve und dem Sperrmittel erreicht.

Hinzukommt, dass durch die Anordnung des Sperrmittels größtenteils unterhalb der Horizontalebene des Spannrahmens das freie Gurtbandende nunmehr typischerweise oberhalb des Sperrmittels in die Antriebswelle eingefädelt wird. Dadurch kann insgesamt der Schwenkbereich des Spannhebels wie beschrieben deutlich vergrößert werden. Außerdem besteht hierdurch die Möglichkeit, den Spannhebel gegenüber bisherigen Ausführungsformen zu verlängern und folglich mit einer insgesamt höheren Vorspannkraft arbeiten zu können. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Spannvorrichtung perspektivisch,
- Fig.2: eine Aufsicht auf den Gegenstand nach Fig. 1 und
- Fig. 3: eine Seitenansicht auf den Gegenstand nach den Figuren 1 und 2.

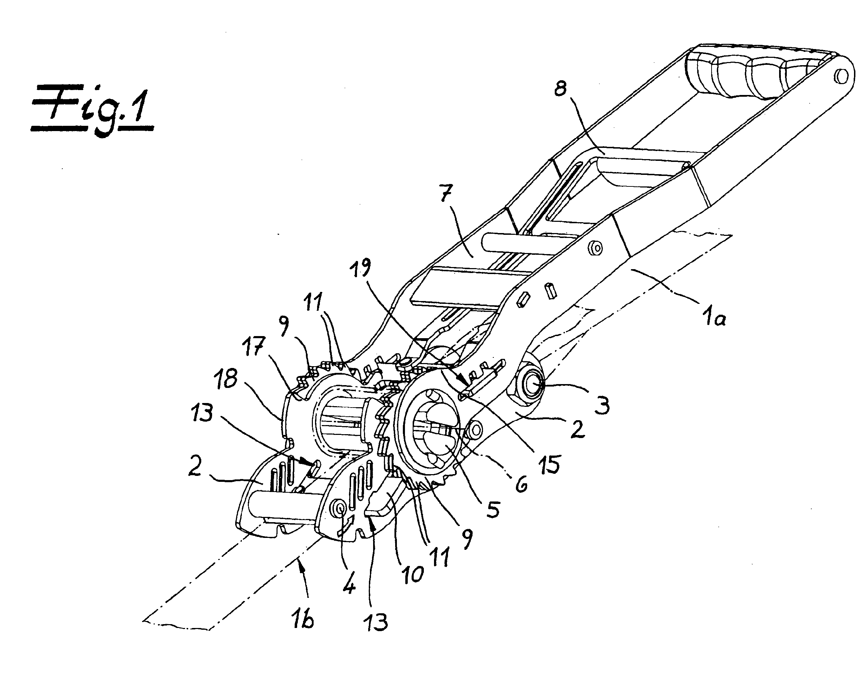

In den Figuren ist eine Spannvorrichtung dargestellt, die zum Spannen von in der Fig. 1 lediglich angedeuteten Gurten 1 dient. Der fragliche Gurt 1 verfügt über ein festes Gurtbandende 1a und ein loses Gurtbandende 1 b und ist meistens als Kunststoffgewebegurt ausgebildet. Typischerweise wird das lose Gurtbandende 1 b um ein zu fixierendes Ladegut auf einer Ladefläche geschlungen und mit Hilfe der nachfolgend noch im Detail zu beschreibenden Spannvorrichtung festgezurrt. Zu diesem Zweck verfügt die Spannvorrichtung über einen Spannrahmen 2, 3, 4. Der Spannrahmen 2, 3, 4 setzt sich im Ausführungsbeispiel aus zwei Seitenwangen 2 und zusätzlich einem Anschlusselement 3 sowie einem Führungselement 4 zusammen.

Bei dem Anschlusselement 3 und dem Führungselement 4 handelt es sich um Bolzen bzw. Verbindungsbolzen, mit deren Hilfe die beiden Seitenwangen 2 des Spannrahmen 2, 3, 4 miteinander gekoppelt werden. Dazu sind das Anschlusselement 3 und das Führungselement 4 jeweils endseitig des Spannrahmens 2, 3, 4 platziert. In Aufsicht formt der Spannrahmen 2, 3, 4 ein offenes Rechteck. Dabei dient das Anschlusselement 3 zur Festlegung des festen Gurtbandendes 1a, wohingegen das Führungselement 4 das freie Gurtbandende 1 b führt, bevor dieses in eine geschlitzte Antriebswelle 5 eintritt und in der Antriebswelle 5 aufgenommen werden kann.

Die Antriebswelle 5 ist ebenso wie ein Spannhebel 7 in dem Spannrahmen 2, 3, 4 gelagert, und zwar um eine gemeinsame Achse 6 drehbar. In dem Spannhebel 7 ist darüber hinaus ein Mitnehmerelement 8 verschiebbar gelagert, welches mit einem Gesperrerad 9 wechselwirkt, das der Antriebswelle 5 zugeordnet ist.

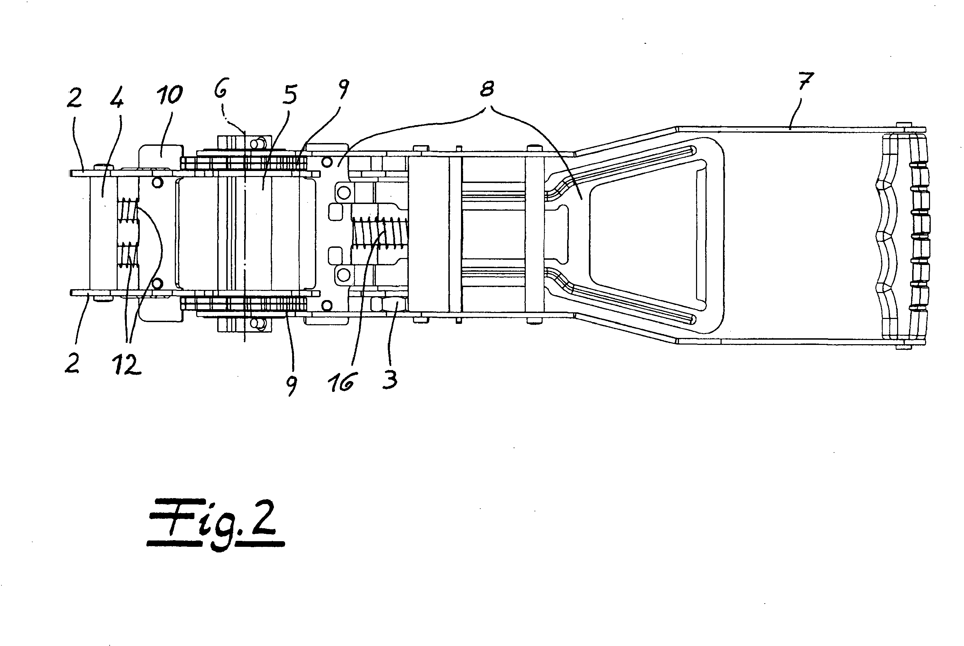

Tatsächlich sind im Rahmen des Ausführungsbeispiels an jeder Seitenwange 2 des Spannrahmens 2, 3, 4 jeweils Gesperreräder 9 realisiert, die drehfest mit der Antriebswelle 5 gekoppelt sind. Die Gesperreräder 9 und die Antriebswelle 5 drehen sich ebenso wie der Spannhebel 7 um die gemeinsame Achse 6. Mit dem Gesperrerad 9 bzw. den jeweiligen Gesperrerädern 9 wechselwirkt ein Sperrmittel 10, bei welchem es sich im Ausführungsbeispiel um eine Sperrklinke handelt. Das Sperrmittel bzw. die Sperrklinke 10 ist in Richtung auf Zähne bzw. Gesperrezähne 11 des jeweiligen Gesperrerades 9 mit Hilfe einer Feder 12 vorgespannt, die im Einzelnen besonders in der Fig. 2 zu erkennen ist. Tatsächlich sind an dieser Stelle zwei Federn 12 realisiert. - Die einzelnen Gesperrezähne 11 des jeweiligen Gesperrerades 9 verfügen im Ausführungsbeispiel an ihren Sperrflanken über einen vergleichbaren Hinterschnitt, wie er in der EP 0 489 376 B1 beschrieben wird.

Das Sperrmittel 10 ist an einem dem Anschlusselement 3 entgegengesetzten Ende des Spannrahmens 2, 3, 4 angeordnet. Es findet sich jenseits des Gesperrerades 9, d. h. vom Anschlusselement 3 aus gesehen an der abgewandten Seite des Gesperrerades 9 bzw. der Antriebswelle 5. Im Ausführungsbeispiel sind an den dem Anschlusselement 3 entgegengesetzten Ende des Spannrahmens 2, 3, 4 die Antriebswelle 5, das Sperrmittel 10 und schließlich das Führungselement 4 in dieser Reihenfolge angeordnet.

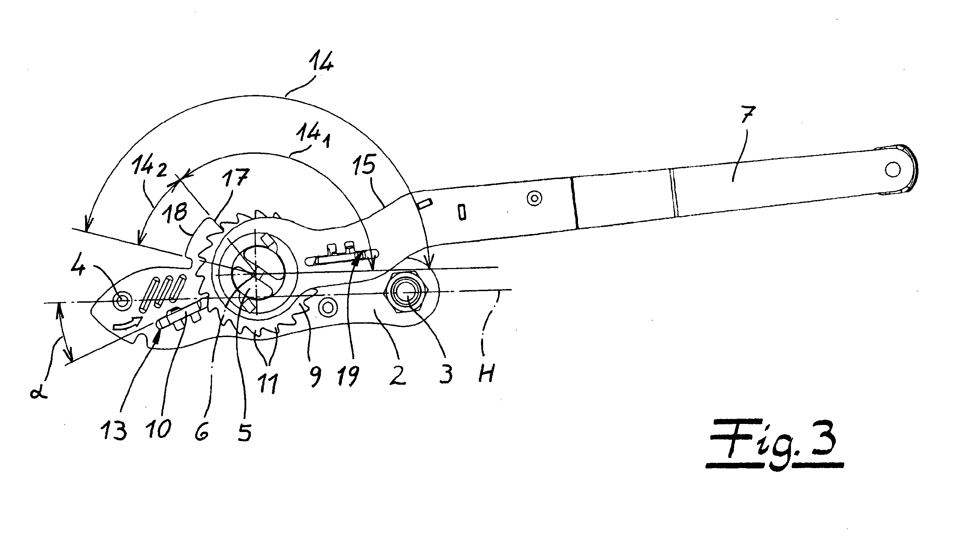

Von besonderer Bedeutung für die Erfindungslehre ist nun die Tatsache, dass das Sperrmittel bzw. die Sperrklinke 10 größtenteils unterhalb einer überwiegend in Fig. 3 angedeuteten Horizontalebene H angeordnet ist. Tatsächlich wird diese Horizontalebene H durch einerseits das Anschlusselement 3 und andererseits das Führungselement 4 des Spannrahmens 2, 3, 4 im gezeigten Beispielfall definiert und festgelegt. Da das Sperrmittel bzw. die Sperrklinke 10 schräg geneigt gegenüber der betreffenden Horizontalebene H in das jeweilige Gesperrerad 9 eingreift, erklärt sich auch das Merkmal, wonach das Sperrmittel bzw. die Sperrklinke 10 größtenteils unterhalb der betreffenden Horizontalebene H angeordnet ist. D. h., von der Erfindung werden auch Abwandlungen dergestalt umfasst, bei welchen das schräg gegenüber der Horizontalebene H geneigte Sperrmittel 10 zumindest teilweise die Horizontalebene H schneidet bzw. diese durchdringt. Solange jedoch das Sperrmittel 10 überwiegend unterhalb der Horizontalebene H angeordnet ist, ist es auch größtenteils unterhalb der fraglichen Horizontalebene H des Spannrahmens 2, 3, 4 angeordnet.

Das Anschlusselement 3 und das Führungselement 4 sind jeweils endseitig des Spannrahmens 2, 3 platziert und spannen den Spannrahmen 2, 3, 4 in der Art eines offenen Rechtecks zusammen mit den Seitenwangen 2 auf. Die Neigung des Sperrmittels 10 bzw. der Sperrklinke 10 gegenüber der Horizontalebene H beträgt in etwa 10° bis 40°, nach dem Ausführungsbeispiel ca. 25°. Hierzu korrespondiert ein entsprechender Neigungswinkel a, der in der Seitenansicht nach Fig. 3 eingetragen ist.

Anhand dieser Seitenansicht erkennt man darüber hinaus noch am besten, dass das Sperrmittel bzw. die Sperrklinke 10 in jeweiligen Schlitzführungen 13 des Spannrahmens 2, 3, 4 geführt wird. Tatsächlich handelt es sich bei dem Sperrmittel 10 um einen Sperrklinkenschieber 10, welcher die beiden sich gegenüberliegenden Schlitzführungen 13 in den Seitenwangen 2 gemeinsam durchgreift. Durch die spezielle Anordnung des Sperrmittels bzw. des Sperrklinkenschiebers 10 größtenteils unterhalb der Horizontalebene H kann der Spannhebel 7 einen gesamten Schwenkbereich 14 beschreiben, der annähernd als Halbkreis ausgebildet ist. Dieser gesamte Schwenkbereich bzw. nahezu Halbkreis 14 ist in der Seitenansicht nach Fig. 3 dargestellt. Man erkennt, dass sich der Schwenkbereich 14 des Spannhebels 7 in im Wesentlichen zwei Bereiche unterteilen lässt, nämlich einen Spannbereich 14₁ und einen Lösebereich 14₂.

Arbeitet der Spannhebel 7 im Spannbereich 14₁, so sorgt das verschiebbar in dem Spannhebel 7 gelagerte Mitnehmerelement 8 dafür, dass die jeweiligen Gesperreräder 9 bei einem Spannvorgang des Spannhebels 7 mitgenommen werden und folglich auch die drehfest mit den Gesperrerädern 9 gekoppelte Antriebswelle 5 eine entsprechende Drehung erfährt. Bei diesem Vorgang wird das freie Gurtbandende 1 b zunehmend auf der Antriebswelle 5 aufgewickelt und das Ladegut verzurrt.

Hierzu korrespondiert eine Bewegung des Spannhebels 7 in der Fig. 3 im Uhrzeigersinn um seine Achse 6. Da der Spannhebel 7 über die beiden Gesperreräder 9 die damit gekoppelte Antriebswelle 5 mitnimmt, dreht sich diese ebenfalls im Spannbereich 14₁ im Uhrzeigersinn. Dadurch erfährt das freie Gurtbandende 1 b die beschriebene Aufwicklung.

Etwaige Rückbewegungen der Antriebswelle 5 und der jeweiligen Gesperreräder 9 im Gegenuhrzeigersinn um die gemeinsame Achse 6 verhindert das jeweils zwischen die Zähne 11 eingreifende und durch die Federn 12 vorgespannte Sperrmittel 10 bzw. verhindert der Sperrklinkenschieber 10. Soll nun der Gurt 1 gelöst werden, so muss das Sperrmittel bzw. muss der Sperrklinkenschieber 10 von den Zähnen 11 des jeweiligen Gesperrerades 9 abgehoben werden. Zu diesem Zweck verfügt der Spannhebel 7 über eine Steuerkurve 15. Da der Spannhebel 7 insgesamt U-förmig gestaltet ist, finden sich zwei gegenüberliegende Steuerkurven 5, die jeweils dem zugehörigen Gesperrerad 9 zugeordnet sind bzw. mit dem Sperrmittel 10 wechselwirken können. Das ist allerdings nur innerhalb des Lösebereiches 14₂ möglich.

Der Spannhebel 7 besitzt also die eine bzw. die beiden Steuerkurven 15, mit deren Hilfe das Sperrmittel 10 in eine unwirksame Stellung in Bezug auf das jeweilige Gesperrerad 9 überführt wird. Dabei fällt im Rahmen der Erfindung auf, dass die zugehörige Steuerkurve 15 mit dem Sperrmittel 10 zur Einnahme dessen unwirksamer Stellung über einen Schwenkbereich des Spannhebels 7 von deutlich mehr als 10° wechselwirkt. Tatsächlich werden im Rahmen des Ausführungsbeispieles Schwenkbereiche des Spannhebels 7 von mehr als 20° beobachtet, die zu einem entsprechenden Bogenbereich von mehr als 20° der Steuerkurve 15 korrespondieren. Entsprechend ist der Lösebereich 14₂ gestaltet und überstreicht ebenfalls im Rahmen des Ausführungsbeispiels einen Bogenwinkel von mehr als 20°.

Ein Arbeitshub des Spannhebels 7 im Spannbereich 14₁ wird mit Hilfe des Mitnehmerelementes 8 begrenzt. Zu diesem Zweck ist dem Mitnehmerelement 8 ebenfalls eine insbesondere in der Fig. 2 zu erkennende Feder 16 zugeordnet, welche das Mitnehmerelement 8 in Richtung auf die Antriebswelle 5 bzw. die zugehörigen Gesperreräder 9 vorspannen. Dem Mitnehmerelement 8 ist ein Anschlag 17 zugeordnet, welcher den Arbeitshub des Spannhebels 7 begrenzt und den Übergang vom Spannbereich 14₁ zum Lösebereich 14₂ markiert.

Der Anschlag 17 muss von dem Mitnehmerelement 8 bei einem Auslösehub des Spannhebels 7 überfahren werden. Bei diesem Auslösehub des Spannhebels 7 wird das Sperrmittel 10 in seine unwirksame Stellung überführt. Zu diesem Zweck ist der Anschlag 17 mit einer Gleitkante 18 für das Mitnehmerelement 8 ausgerüstet, entlang welcher sich das Mitnehmerelement 8 bei dem fraglichen Auslösehub bewegt. Die Gleitkante 18 ist jenseits des Spannbereiches 14₁ im Lösebereich 14₂ vorgesehen und schließt sich an den Anschlag 17 in Richtung des Auslösehubes an. Tatsächlich beschreibt die Gleitkante 18 einen an die Steuerkurve 15 angepassten Bogenbereich. Im Ausführungsbeispiel beschreiben sowohl die Steuerkurve 15 als auch die Gleitkante 18 jeweils einen Bogen, welcher zu einem Schwenkwinkel des Handhebels 7 von mehr als 20° korrespondiert.

D. h., wenn der Handhebel 7 von dem Spannbereich 14₁ in den Lösebereich 14₂ übergeht, muss zunächst das Mitnehmerelement 8 von einem Bediener von den jeweiligen Gesperrerädern 9 und dessen Eingriff abgehoben werden. Der Anschlag 17 muss von dem Mitnehmerelement 8 überwunden werden und das Mitnehmerelement 8 bewegt sich anschließend während des Auslösehubes auf der Gleitkante 18 jenseits des Anschlages 17 entlang. Bei dieser Schwenkbewegung des Spannhebels 7 beaufschlagt zugleich die Steuerkurve 15 das Sperrmittel 10, welches infolge des von der Steuerkurve 15 und der Gleitkante 18 überstrichenen Bogenbereiches von wenigstens 20° besonders feinfühlig von seinem Eingriff zwischen den Zähnen 11 des jeweiligen Gesperrerades 9 abgehoben wird. Dadurch kann das zuvor festgespannte lose Gurtbandende 1 b besonders dosiert entspannt werden.

Die Funktionsweise ist wie folgt. Nachdem das freie Gurtbandende 1 b in den Schlitz der Antriebswelle 5 eingefädelt worden ist, kann die Antriebswelle 5 mit Hilfe des Spannrahmens 7 gedreht werden. Bei diesem Vorgang wickelt sich das freie Gurtbandende 1 b auf der Antriebswelle 5 auf und wird ein mit Hilfe des Gurtes 1 festgelegtes Ladegut zunehmend verzurrt. Dabei fällt auf, dass das freie Gurtbandende 1 b aufgrund der Anordnung des Sperrmittels 10 größtenteils unterhalb der Horizontalebene H des Spannrahmens 2, 3, 4 über das Führungselement 4 und auch oberhalb des fraglichen Sperrmittels 10 in die fragliche Antriebswelle 5 eingeschlauft werden kann. Um nun die Antriebswelle 5 zu drehen und das freie Gurtbandende 1 b auf der Antriebswelle 5 aufzuwickeln, greift jeweils das Mitnehmerelement 8 in die zugehörigen Gesperreräder 9 ein. Dies geschieht in der Arbeitsrichtung oder Spannrichtung bzw. während des Arbeitshubes, im Ausführungsbeispiel durch eine Schwenkbewegung des Spannhebels 7 um die zugehörige Achse 6 im Uhrzeigersinn.

Drehbewegungen der Antriebswelle 5 in entgegengesetzter Richtung, d. h. im Gegenuhrzeigersinn, werden dadurch unterbunden, dass das Sperrmittel bzw. der Sperrklinkenschieber 10 jeweils zwischen die Zähne 11 eingreift und eine Rückdrehung entgegen dem Arbeitshub (im Gegenuhrzeigersinn) verhindert. Die Spannbewegung des Spannhebels 7 kann dabei innerhalb des gesamten Spannbereiches 14₁ erfolgen, und zwar letztlich von einer im Wesentlichen horizontalen Position des Spannhebels 7 bis zum Anschlag 17 für das Mitnehmerelement 8. Tatsächlich liegt diesbezüglich ein nutzbarer Schwenkbereich für den Spannbereich 14₁ von ca. 130° ca. 160° vor, so dass eine besonders effektive und schnelle Spannung des freien Gurtbandendes 1 b gelingt.

Um nun das festgezurrte und freie Gurtbandende 1 b wieder zu lösen, muss der Spannhebel 7 in den Lösebereich 14₂ überführt werden. Zu diesem Zweck wird das Mitnehmerelement 8 gegenüber seinen Schlitzführungen 19 im Spannhebel 7 von einem Bediener gegen die Kraft der Feder 16 beaufschlagt, so dass das Mitnehmerelement 8 über den Anschlag 17 gehoben werden kann. Im Anschluss daran liegt das Mitnehmerelement 8 an der Gleitkante 18 an und bewegt sich entlang der Gleitkante 18 innerhalb des Lösebereiches 14₂. Bei diesem Vorgang arbeitet die jeweilige Steuerkurve 15 zugleich auf das Sperrmittel 10 und bewegt dieses gegen die Kraft der zugehörigen Federn 12 vom Eingriff in die Zähne 11 weg. Sobald das Sperrmittel 10 nicht mehr im Eingriff mit den zugehörigen Gesperrerädern 9 ist, kann das Antriebsrad 5 eine Drehung im Gegenuhrzeigersinn vollführen und das freie Gurtbandende 1 b kommt von der Antriebswelle 5 los. Der Lösebereich 14₂ korrespondiert bei diesem Vorgang zu einer Schwellbewegung des Spannhebels 7 von ca. 20°.

## Patentansprüche

1. Spannvorrichtung zum Spannen von Gurten (1) oder dergleichen, mit einem Spannrahmen (2, 3, 4) mit an einem Ende angeordneten Anschlusselement (3) und einem an dem Spannrahmen (2, 3, 4) schwenkbar gelagerten Spannhebel (7) zum Betätigen einer in dem Spannrahmen (2, 3, 4) um eine Achse (6) drehbar gelagerten Antriebswelle (5) mit zumindest einem zugehörigen Gesperrerad (9), und mit einem mit dem Gesperrerad (9) wechselwirkenden Sperrmittel (10), welches an einem dem Anschlusselement (3) entgegengesetzten anderen Ende des Spannrahmens (2, 3, 4) jenseits des Gesperrerades (9) vorgesehen ist, wobei das Anschlusselement (3) zur Festlegung eines festen Gurtbandendes (1a) dient, wohingegen das Führungselement (4) ein freies Gurtbandende (1 b) führt, bevor dieses in die Antriebswelle (5) eintritt und hierin aufgenommen werden kann,
**dadurch gekennzeichnet, dass**
- das Sperrmittel (10) größtenteils unterhalb einer Horizontalebene (H) des Spannrahmens (2, 3, 4) angeordnet ist, wobei
- die Horizontalebene (H) durch einerseits das Anschlusselement (3) und andererseits ein Führungselement (4) definiert wird, die jeweils endseitig des Spannrahmens (2, 3, 4) platziert sind.

2. Spannvorrichtung nach Anspruch 1, **dadurch gekennzeichnet, dass** das Anschlusselement (3) und das Führungselement (4) als jeweilige Seitenwangen (2) des Spannrahmens (2, 3, 4) miteinander koppelnde Verbindungsbolzen ausgebildet sind.

3. Spannvorrichtung nach einem der Ansprüche 1 bis 2, **dadurch gekennzeichnet, dass** das Sperrmittel (10) schräg geneigt gegenüber der Horizontalebene (H) in das Gesperrerad (9) eingreift.

4. Spannvorrichtung nach Anspruch 3, **dadurch gekennzeichnet, dass** die Neigung (α) gegenüber der Horizontalebene (H) ca. 10° bis 40°, vorzugsweise ca. 15° bis 25° beträgt.

5. Spannvorrichtung nach einem der Ansprüche 1 bis 4, **dadurch gekennzeichnet, dass** das Sperrmittel (10) als in Schlitzführungen (13) des Spannrahmens (2, 3, 4) geführter Sperrklinkenschieber (10) ausgebildet ist.

6. Spannvorrichtung nach einem der Ansprüche 1 bis 5, **dadurch gekennzeichnet, dass** der Spannhebel (7) einen annährend als Halbkreis ausgebildeten Schwenkbereich (14) überstreicht.

7. Spannvorrichtung nach einem der Ansprüche 1 bis 6, **dadurch gekennzeichnet, dass** der Spannhebel (7) einen Schwenkbereich (14) von bis zu ca. 170° aufweist.

8. Spannvorrichtung nach einem der Ansprüche 1 bis 7, **dadurch gekennzeichnet, dass** der Spannhebel (7) eine Steuerkurve (15) aufweist, welche das Sperrmittel (10) in eine unwirksame Stellung in Bezug auf das Gesperrerad (9) überführt.

9. Spannvorrichtung nach Anspruch 8, **dadurch gekennzeichnet, dass** die Steuerkurve (15) mit dem Sperrmittel (10) zur Einnahme dessen unwirksamer Stellung über einen Schwenkbereich des Spannhebels (7) von mehr als 10° wechselwirkt (Lösebereich 14₂).

10. Spannvorrichtung nach einem der Ansprüche 1 bis 9, **dadurch gekennzeichnet, dass** der Spannhebel (7) mit einem Mitnehmerelement (8) für das Gesperrerad (9) ausgerüstet ist, welches einen Arbeitshub des Spannhebels (7) begrenzt.

11. Spannvorrichtung nach Anspruch 10, **dadurch gekennzeichnet, dass** dem Mitnehmerelement (8) ein Anschlag (17) zugeordnet ist, welcher von dem Mitnehmerelement (8) bei einem Auslösehub des Spannhebels (7) zum Überführen des Sperrmittels (10) in seine unwirksame Stellung überfahren wird.

12. Spannvorrichtung nach Anspruch 11, **dadurch gekennzeichnet, dass** sich an den Anschlag (17) eine Gleitkante (18) für das Mitnehmerelement (8) anschließt.

13. Spannvorrichtung nach Anspruch 12, **dadurch gekennzeichnet, dass** die Gleitkante (18) einen an die Steuerkurve (15) angepassten Bogenbereich beschreibt.

## Claims

1. A tensioning device for tensioning belts (1) or the like, with a tensioning frame (2, 3, 4) having a connection element (3) arranged at one end and a tensioning lever (7) pivotably mounted on the tensioning frame (2, 3, 4) for actuating a drive shaft (5) that is mounted in the tensioning frame (2, 3, 4) to be rotatable about an axis (6) and that comprises at least one associated locking gear wheel (9), and with a locking means (10) which interacts with the locking gear wheel (9) and is provided at another end of the tensioning frame (2, 3, 4), which other end is located opposite the connection element (3) on the far side of the locking gear wheel (9), wherein the connection element (3) serves for fixing a tightened belt strap end (1 a), whereas the guide element (4) guides a free belt strap end (1 b) before it is fed into the drive shaft (5) and can be received therein,
**characterized in that**
- the locking means (10) is mainly arranged below a horizontal plane (H) of the tensioning frame (2, 3, 4), wherein
- the horizontal plane (H) is defined, on the one hand, by the connection element (3) and, on the other, by a guide element (4), which are in each case placed at the end of the tensioning frame (2, 3, 4).

2. The tensioning device according to claim 1, **characterized in that** the connection element (3) and the guide element (4) are formed as connection bolts for coupling the respective side walls (2) of the tensioning frame (2, 3, 4) with each other.

3. The tensioning device according to any one of the claims 1 to 2, **characterized in that** the locking means (10) is inclined at an angle with respect to the horizontal plane (H) and engages in the locking gear wheel (9).

4. The tensioning device according to claim 3, **characterized in that** the inclination (α) with respect to the horizontal plane (H) is ca. 10°- to 40°-, preferably ca. 15º to 25º.

5. The tensioning device according to any one of the claims 1 to 4, **characterized in that** the locking means (10) is formed as a ratchet slider (10) that is guided in slot guides (13) of the tensioning frame (2, 3, 4).

6. The tensioning device according to any one of the claims 1 to 5, **characterized in that** the tensioning lever (7) passes over a pivoting range (14) that has approximately the form of a semicircle.

7. The tensioning device according to any one of the claims 1 to 6, **characterized in that** the tensioning lever (7) comprises a pivoting range (14) of up to ca. 170º.

8. The tensioning device according to any one of the claims 1 to 7, **characterized in that** the tensioning lever (7) comprises a control cam (15) which transfers the locking means (10) into an inoperative position with regard to the locking gear wheel (9).

9. The tensioning device according to claim 8, **characterized in that** the control cam (15) interacts with the locking means (10) over a pivoting range of the tensioning lever (7) of more than 10º (release range 14₂) in order for the locking means to take its inoperative position.

10. The tensioning device according to any one of the claims 1 to 9, **characterized in that** the tensioning lever (7) is equipped with a driver element (8) for the locking gear wheel (9), which driver element limits the working stroke of the tensioning lever (7).

11. The tensioning device according to claim 10, **characterized in that** a stopper (17) is associated with the driver element (8), which stopper is passed over by the driver element (8) during a release stroke of the tensioning lever (7) for transferring the locking means (10) into its inoperative position.

12. The tensioning device according to claim 11, **characterized in that** a sliding edge (18) for the driver element (8) is connected the stopper (17).

13. The tensioning device according to claim 12, **characterized in that** the sliding edge (18) represents an arc sector that is adapted to the control cam (15).

## Revendications

1. Dispositif de serrage pour serrer des courroies (1) ou similaires, comprenant un cadre de serrage (2, 3, 4) avec un élément de connexion (3) disposé à une extrémité et un levier de serrage (7) disposé pivotant sur le cadre de serrage (2, 3, 4) pour actionner un arbre d'entraînement (5) disposé en étant rotatif sur un axe (6) dans le cadre de serrage (2, 3, 4) comprenant au moins une roue d'encliquetage (9) correspondante, et un moyen de blocage (10) en coopération avec la roue d'encliquetage (9) qui est prévu sur une autre extrémité du cadre de serrage (2, 3, 4) au-delà de la roue d'encliquetage (9), opposée à l'élément de connexion (3), sachant que l'élément de connexion (3) sert à fixer une extrémité de courroie (1 a) fixe, alors que l'élément de guidage (4) dirige une extrémité de courroie libre (1 b) avant que celle-ci n'entre dans l'arbre d'entraînement (5) et puisse y être reçue,
**caractérisé en ce que**
- le moyen de blocage (10) est disposé en majeure partie en-dessous d'un plan horizontal (H) du cadre de serrage (2, 3, 4), sachant que
- le plan horizontal (H) est défini d'une part par l'élément de connexion (3) et d'autre part par un élément de guidage (4) qui sont placés respectivement aux extrémités du cadre de serrage (2, 3, 4).

2. Dispositif de serrage selon la revendication 1, **caractérisé en ce que** l'élément de connexion (3) et l'élément de guidage (4) sont formés en tant que boulons de connexion couplant entre elles des parois latérales (2) respectives du cadre de serrage (2, 3, 4).

3. Dispositif de serrage selon la revendication 1 ou 2, **caractérisé en ce que** le moyen de blocage (10) se met en prise dans la roue d'encliquetage (9) de façon inclinée par rapport au plan horizontal (H).

4. Dispositif de serrage selon la revendication 3, **caractérisé en ce que** l'inclinaison (α) par rapport au plan horizontal (H) fait environ 10° à 40°, de préférence environ 15° à 25°.

5. Dispositif de serrage selon l'une des revendications 1 à 4, **caractérisé en ce que** le moyen de blocage (10) est formé en tant que tiroir à cliquets de blocage (10) dirigé dans des guides fendus (13) du cadre de serrage (2, 3,4).

6. Dispositif de serrage selon l'une des revendications 1 à 5, **caractérisé en ce que** le levier de serrage (7) couvre une plage de pivotement (14) formée presque en demi-cercle.

7. Dispositif de serrage selon l'une des revendications 1 à 6, **caractérisé en ce que** le levier de serrage (7) présente une plage de pivotement (14) allant jusqu'à environ 170°.

8. Dispositif de serrage selon l'une des revendications 1 à 7, **caractérisé en ce que** le levier de serrage (7) présente une courbe de commande (15) qui fait passer le moyen de blocage (10) dans une position inactive par rapport à la roue d'encliquetage (9).

9. Dispositif de serrage selon la revendication 8, **caractérisé en ce que** la courbe de commande (15) coopère avec le moyen de blocage (10) pour qu'il adopte sa position inactive sur une plage de pivotement du levier de blocage (7) supérieure à 10° (plage de déclenchement 14₂).

10. Dispositif de serrage selon l'une des revendications 1 à 9, **caractérisé en ce que** le levier de serrage (7) est équipé d'un élément entraîneur (8) pour la roue d'encliquetage (9), lequel délimite une course de travail du levier de serrage (7).

11. Dispositif de serrage selon la revendication 10, **caractérisé en ce qu'**une butée (17) est attribuée à l'élément entraîneur (8), laquelle est dépassée par l'élément entraîneur (8) lors d'une course de déclenchement du levier de serrage (7) pour faire passer le moyen de blocage (10) dans sa position inactive.

12. Dispositif de serrage selon la revendication 11, **caractérisé en ce qu'**une arête de coulissement (18) pour l'élément entraîneur (8) se raccorde sur la butée (17).

13. Dispositif de serrage selon la revendication 12, **caractérisé en ce que** l'arête de coulissement (18) décrit une zone en arc adaptée à la courbe de commande (15).
